# EUROPÄISCHE PATENTSCHRIFT

(11) **EP 0 677 428 B1**
(45) Veröffentlichungstag und Bekanntmachung des Hinweises auf die Patenterteilung: **10.06.1998**
(21) Anmeldenummer: 95104265.4
(22) Anmeldetag: 23.03.1995
(51) Int. Cl.: B60R 1/12

(54) **Spiegelhalterung für einen Innenrückblickspiegel eines Kraftfahrzeuges**
Mirror mount for an internal rearview mirror of a motor vehicle
Support d'un rétroviseur interne d'un véhicule automobile

(30) Priorität: 14.04.1994 DE 9406204 U
(43) Veröffentlichungstag der Anmeldung: 18.10.1995
(73) Patentinhaber: REITTER & SCHEFENACKER GmbH & Co. KG, D-73730 Esslingen (DE)
(72) Erfinder: Zimmermann, Werner, D-73113 Ottenbach (DE); Waldmann, Bernd, D-73733 Esslingen (DE)
(74) Vertreter: Kohl, Karl-Heinz

(56) Entgegenhaltungen:
- EP-A- 0 609 453
- EP-A- 0 635 395
- US-A- 4 930 742

## Beschreibung

Die Erfindung betrifft eine Spiegelhalterung für einen Innenrückblickspiegel eines Kraftfahrzeuges nach dem Oberbegriff des Anspruches 1.

Es sind bereits Verkehrsleitsysteme im Einsatz, die es dem Fahrer eines Kraftfahrzeuges ermöglichen, seine augenblickliche Position beispielsweise innerhalb einer Stadt zu erkennen oder zu einer gewünschten Straße oder dgl. zu finden. Auf den Straßen befinden sich entsprechende Markierungen, beispielsweise in Form von Baken, die mit einer Sende/Empfangseinheit, die im Kraftfahrzeug untergebracht ist, angepeilt werden. Mit Hilfe dieser Markierungen läßt sich einfach die augenblickliche Lage des Kraftfahrzeuges bestimmen. Die Sende/Empfangseinheit ist an der Windschutzscheibe des Kraftfahrzeuges angeklebt. Die elektrischen Leitungen für die Sende/Empfangseinheiten müssen ebenfalls an der Windschutzscheibe befestigt werden. Dies ist mit einem erheblichen Aufwand verbunden.

Es ist auch bekannt (US-A-4 930 742), an einer Spiegelhalterung für einen Innenrückblickspiegel eines Kraftfahrzeuges eine Sende/Empfangseinheit eines Verkehrsleitsystems anzubringen. Die Sende/Empfangseinheit hat ein Gehäuse, das an der Unterseite eines Stützkörpers der Spiegelhalterung befestigt wird. Da die Sende/Empfangseinheit an die Spiegelhalterung angesetzt wird, benötigt der Innenrückblickspiegel erheblichen Einbauraum. Zum Ansetzen an die Spiegelhalterung ist zudem eine besondere konstruktive Ausbildung der Wand der Spiegelhalterung erforderlich. Beim Senden und Empfangen können jedoch Störungen auftreten, so daß dem Fahrer die vom Verkehrsleitsystem ausgehenden Informationen nicht einwandfrei zugehen.

Der Erfindung liegt die Aufgabe zugrunde, eine Spiegelhalterung dieser Art so auszubilden, daß eine optimale Funktionsfähigkeit der Sende/Empfangseinheit bei kleinem Platzbedarf und einfacher konstruktiver Gestaltung gewährleistet ist.

Diese Aufgabe wird bei einer Spiegelhalterung der gattungsbildenden Art erfindungsgemäß mit den kennzeichnenden Merkmalen des Anspruches 1 gelöst.

Durch die erfindungsgemäße Ausbildung der Aufnahme können die Sendesignale der Sende/Empfangseinheit ungehindert aus- und eintreten. Infolge der Unterteilung der Aufnahme befinden sich Sender und Empfänger in getrennten Räumen, wodurch die Sendesignale durch die Empfangssignale nicht beeinträchtigt werden können. Dadurch wird eine optimale Sende- und Empfangsqualität gewährleistet, so daß Informationen vom Verkehrsleitsystem einwandfrei an den Fahrer weitergegeben werden können. Die Sende/Empfangseinheit ist in der Spiegelhalterung untergebracht, so daß zusätzlicher Raum für die Sende/Empfangseinheit nicht benötigt wird. Auch ist eine besondere konstruktive Gestaltung der Einheit und/oder der Spiegelhalterung nicht erforderlich.

Bei einer bevorzugten Ausführungsform ist die Sende/Empfangseinheit eine IR-Sende/Empfangseinheit. Selbstverständlich kann die Sende/Empfangseinheit auch mit anderen Signalen, beispielsweise mit Ultraschall arbeiten. Grundsätzlich ist jede geeignete Ausbildung möglich.

Bei einer anderen Ausführungsform ist die Spiegelhalterung mit mindestens einer Aufnahme versehen, in der wenigstens eine Sende/Empfangseinheit eines elektronischen Mautsystems untergebracht ist. Dieses Mautsystem soll auf Autobahnen eingesetzt werden, um die Autobahngebühren für jedes die Autobahn benutzende Kraftfahrzeug zu ermitteln. Die hierfür benötigten Sende/Empfangseinheiten lassen sich in der Aufnahme der Spiegelhalterung einfach und geschützt unterbringen.

Bei einer bevorzugten Ausführungsform ist die Spiegelhalterung sowohl mit der Sende/Empfangseinheit für das Verkehrsleitsystem als auch mit der Sende/Empfangseinheit für das Mautsystem versehen. Beide Sende/Empfangseinheiten sind vorteilhaft in einer gemeinsamen Aufnahme der Spiegelhalterung untergebracht.

Auch die Sende/Empfangseinheit für das elektronische Mautsystem ist an die Fahrzeugbatterie zur Stromversorgung angeschlossen.

Die erfindungsgemäße Spiegelhalterung weist vorteilhaft ein Gehäuse auf, in dem sich die Aufnahme für die Sende/Empfangseinheit befindet.

Dieses Gehäuse ist vorteilhaft mit dem Fuß der Spiegelhalterung verbunden, vorzugsweise einstückig mit ihm ausgebildet. Dadurch kann die Spiegelhalterung zusammen mit dem Gehäuse in einem Arbeitsgang hergestellt und montiert werden. Es ist nicht erforderlich, das Gehäuse gesondert zu montieren.

Bei einer bevorzugten Ausführungsform ist das Gehäuse über ein Zwischenstück mit dem Fuß verbunden. Das Zwischenstück kann so ausgebildet werden, daß das Gehäuse und die darin befindliche Sende/Empfangseinheit an einer für ihre Funktion geeigneten Stelle an der Windschutzscheibe des Kraftfahrzeuges liegen.

Damit der Innenrückblickspiegel mit dem Gehäuse nicht kollidiert, steht vom Fuß ein Träger ab, an dem der Innenrückblickspiegel angeordnet ist.

Um die Sende/Empfangseinheit optimal im Gehäuse zu schützen, ist es mit einer Abdeckung versehen. Sie ist so ausgebildet, daß die Sende/Empfangssignale der Sende/Empfangseinheit durch die Abdeckung ungehindert durchtreten können.

Um die Sende/Empfangseinheit einfach montieren zu können, ist die Abdeckung vorteilhaft lösbar mit dem Gehäuse verbunden. Dadurch besteht auch die Möglichkeit, die Sende/Empfangseinheit im Bedarfsfalle leicht reparieren und/oder austauschen zu können.

In der Aufnahme ist vorteilhaft auch die Leiterplatte untergebracht, auf der der Sender und der Empfänger der Sende/Empfangseinheit sitzen.

Damit die Sendesignale der Sende/Empfangseinheit ungehindert aus dem Gehäuse austreten können, ist die Aufnahme in Senderichtung der Sende/Empfangseinheit erweitert ausgebildet.

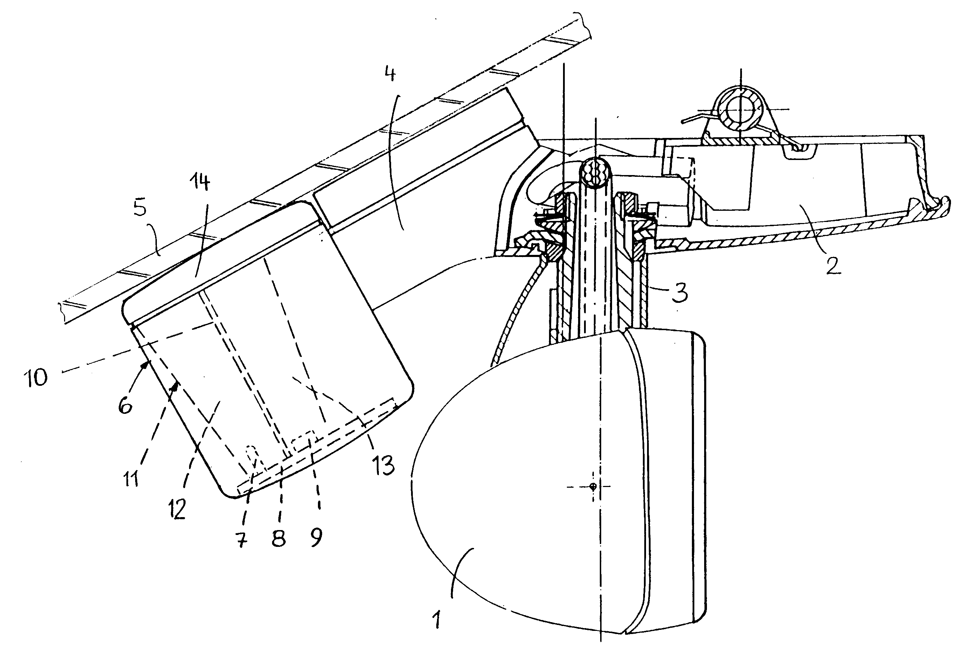

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt teilweise in Seitenansicht und teilweise im Schnitt einen erfindungsgemäßen Innenrückblickspiegel.

Der Innenrückblickspiegel 1 ist mit einem Fuß 2 in bekannter Weise an der Innenseite des Daches eines Kraftfahrzeuges befestigt. Vom Spiegelfuß 2 steht nach unten ein Träger 3 ab, an dem der Innenrückblickspiegel 1 befestigt ist. Der Fuß 2 erstreckt sich in Fahrtrichtung des Fahrzeuges nach vorn und hinten über den Träger 3. Der nach vorn überstehende Teil des Fußes 2 ist ein Zwischenstück 4, das an der Innenseite einer Windschutzscheibe 5 des Kraftfahrzeuges anliegt. Das Zwischenstück 4 verbindet ein Gehäuse 6 mit dem Fuß 2. Das Gehäuse 6 kann am Zwischenstück 4 durch Kleben, Rasten, Schrauben, Stecken oder dgl. befestigt sein. Es ist auch möglich, das Gehäuse 6 einstückig mit dem Zwischenstück 4 auszubilden. Im Gehäuse 6 ist ein Infrarotsender 7 untergebracht, der auf einer Leiterplatte 8 sitzt. Auf ihr sitzt außerdem ein Infrarotempfänger 9, mit dem in noch zu beschreibender Weise Signale empfangen werden können. Um eine Beeinträchtigung des IR-Empfängers 9 durch den Sender 7 zu vermeiden, ist zwischen beiden Bauteilen eine Zwischenwand 10 vorgesehen.

Der Sender 7 und der Empfänger 9 liegen in einem Aufnahmeraum 11 innerhalb des Gehäuses 6. Dieser Aufnahmeraum 11 ist vorteilhaft in Richtung auf die Windschutzscheibe 5 erweitert ausgebildet. Durch die Zwischenwand 10 wird er in zwei Bereiche 12 und 13 unterteilt, in denen der Sender 7 bzw. der Empfänger 9 untergebracht sind. Das Gehäuse 6 hat eine Abdeckung 14, die vorzugsweise lösbar mit dem Gehäuse 6 verbunden ist. Dadurch ist die Elektronik innerhalb des Gehäuses 6 einfach zugänglich und kann bei Bedarf repariert bzw. ausgetauscht werden. Die Abdeckung 14 ist für die vom Sender 7 ausgesandte Infrarotstrahlung durchlässig, so daß auch der Empfänger 9 die entsprechenden Infrarotsignale erhält.

Der Sender 7 und der Empfänger 9 bilden den kraftfahrzeugseitigen Teil eines Verkehrsleitsystems, mit dem es möglich ist, dem Kraftfahrzeug bzw. dem Fahrer entsprechende Informationen während der Fahrt oder auch bei Stillstand des Kraftfahrzeuges zukommen zu lassen. Solche Verkehrsleitsysteme sind bekannt und werden darum nicht im einzelnen erläutert. Diese Verkehrsleitsysteme beruhen darauf, daß beispielsweise innerhalb einer Stadt Markierungen vorgesehen sind, die vom Sender 7 angepeilt werden können. Die reflektierten Infrarotsignale werden vom Empfänger 9 aufgefangen, wodurch die Einrichtung 7, 9 Informationen darüber erhält, wo sich das Kraftfahrzeug innerhalb des Stadtgebietes befindet.

Da die Elektronik, der Sender 7 und der Empfänger 9 innerhalb des Gehäuses 6 untergebracht sind und dieses Gehäuse Bestandteil der Spiegelhalterung ist, müssen diese Teile nicht gesondert im Kraftfahrzeug untergebracht werden. Über das Gehäuse 6, das Zwischenstück 4 und den Fuß 2 lassen sich die elektrischen Verbindungen zur Leiterplatte 8 einfach innerhalb des Kraftfahrzeuges verlegen.

Abweichend vom dargestellten Ausführungsbeispiel können die Leiterplatte 8, der Sender 7 und der Empfänger 9 auch im Zwischenstück 4 der Spiegelhalterung untergebracht sein. In diesem Falle ist das Gehäuse 6 nicht erforderlich.

In der Spiegelhalterung kann auch eine elektronische Einrichtung untergebracht sein, die in Verbindung mit einem beabsichtigten Mautsystem eingesetzt werden soll. Die entsprechende Einrichtung, mit der das Fahrzeug über das Mautsystem erkannt werden kann, ist ebenfalls vorteilhaft im Gehäuse 6 der Spiegelhalterung untergebracht. Ebenso ist es aber auch möglich, diese Einrichtung im Zwischenstück 4 vorzusehen. Diese Einrichtung kann darüberhinaus zusammen mit der Verkehrsleitsystem-Einrichtung vorgesehen sein. Beide Einrichtungen können im Gehäuse 6 oder im Zwischenstück 4 untergebracht sein. Ebenso ist es aber auch möglich, die eine Einrichtung im Gehäuse 6 und die andere Einrichtung im Zwischenstück 4 anzuordnen. Da die Spiegelhalterung ohnehin im Kraftfahrzeug vorhanden ist, wird ein zusätzlicher Einbauraum für die Einrichtung nicht benötigt. Zudem lassen sich über die Spiegelhalterung die entsprechenden elektrischen Zuleitungen einfach im Kraftfahrzeug verlegen.

## Patentansprüche

1. Spiegelhalterung für einen Innenrückblickspiegel (1) eines Kraftfahrzeuges, mit einem Fuß (2), der mit dem Innenrückblickspiegel (1) verbunden ist, und mit wenigstens einer Sende/Empfangseinheit (7, 9) eines Verkehrsleitsystems,
dadurch gekennzeichnet, daß die Sende/Empfangseinheit (7, 9) in einer in der Spiegelhalterung vorgesehenen Aufnahme (11) untergebracht ist, die durch eine Zwischenwand (10) in einen Aufnahmeraum (12) für einen Sender (7) und einen weiteren Aufnahmeraum (13) für einen Empfänger (9) der Sende/Empfangseinheit (7, 9) unterteilt ist.

2. Spiegelhalterung nach Anspruch 1,
dadurch gekennzeichnet, daß die Sende/Empfangseinheit (7, 9) eine IR-Sende/Empfangseinheit ist.

3. Spiegelhalterung nach Anspruch 1 oder 2,
dadurch gekennzeichnet, daß die Spiegelhalterung mindestens eine Aufnahme (11) für wenigstens eine Sende/Empfangseinheit eines elektronischen Mautsystems aufweist.

4. Spiegelhalterung nach Anspruch 3,
dadurch gekennzeichnet, daß die Sende/Empfangseinheit des Verkehrsleitsystems und des Mautsystems in einer gemeinsamen Aufnahme untergebracht sind.

5. Spiegelhalterung nach einem der Ansprüche 1 bis 4,
dadurch gekennzeichnet, daß die Aufnahme (11) in einem Gehäuse (6) der Spiegelhalterung vorgesehen ist, das vorzugsweise über ein Zwischenstück (4) mit dem Fuß (2) verbunden ist.

6. Spiegelhalterung nach einem der Ansprüche 1 bis 5,
dadurch gekennzeichnet, daß vom Fuß (2) ein Träger (3) absteht, an dem der Innenrückblickspiegel (1) angeordnet ist.

7. Spiegelhalterung nach Anspruch 5 oder 6,
dadurch gekennzeichnet, daß das Gehäuse (6) mit einer vorzugsweise lösbar angeordneten Abdeckung (14) versehen ist, durch welche die Sende/Empfangssignale der Sende/Empfangseinheit (7, 9) hindurchtreten.

8. Spiegelhalterung nach einem der Ansprüche 1 bis 7,
dadurch gekennzeichnet, daß in der Aufnahme (11) eine Leiterplatte (8) untergebracht ist, auf der der Sender (7) und der Empfänger (9) der Sende/Empfangseinheit (7, 9) sitzen.

9. Spiegelhalterung nach einem der Ansprüche 1 bis 8,
dadurch gekennzeichnet, daß die Aufnahme (11) in Senderichtung der Sende/Empfangseinheit (7, 9) erweitert ausgebildet ist.

## Claims

1. A mirror mounting for an internal rear-view mirror (1) of a motor vehicle, with a base (2) connected to the internal rear-view mirror (1), and with at least one transmitting and receiving unit (7, 9) of a traffic-management system, **characterized in that** the transmitting and receiving unit (7, 9) is housed in a holding means (11) provided in the mirror mounting and divided by a partition wall (10) into a holding space (12) for a transmitter (7) and a farther holding space (13) for a receiver (9) of the transmitting and receiving unit (7, 9).

2. A mirror mounting according to Claim 1, **characterized in that** the transmitting and receiving unit (7, 9) is an IR transmitting and receiving unit.

3. A minor mounting according to Claim 1 or 2, **characterized in that** the mirror mounting has at least one holding means (11) for at least one transmitting and receiving unit of an electronic toll system.

4. A mirror mounting according to Claim 3, **characterized in that** the transmitting and receiving unit of the traffic-management system and of the toll system are housed in a common holding means.

5. A mirror mounting according to one of Claims 1 to 4, **characterized in that** the holding means (11) is provided in a housing (6) of the mirror mounting which is preferably connected to the base (2) by way of an intermediate member (4).

6. A mirror mounting according to one of Claims 1 to 5, **characterized in that** a support (3), on which the internal rear-view mirror (1) is mounted, projects from the base (2).

7. A mirror mounting according to Claim 5 to 6, **characterized in that** the housing (6) is provided with a covering (14) which is preferably arranged in a detachable manner and through which the transmitted and received signals of the transmitting and receiving unit (7, 9) pass.

8. A mirror mounting according to one of Claims 1 to 7, **characterized in that** a printed circuit board (8), on which the transmitter (7) and the receiver (9) of the transmitting and receiving unit (7, 9) are mounted, is housed in the holding means (11).

9. A mirror mounting according to one of Claims 1 to 8, **characterized in that** the holding means (11) is enlarged in the transmitting direction of the transmitting and receiving unit (7, 9).

## Revendications

1. Support pour un rétroviseur interne (1) d'un véhicule automobile, comportant un pied (2) qui est relié au rétroviseur interne (1), et au moins une unité émettrice/réceptrice (7, 9) d'un système de guidage de circulation, caractérisé en ce que l'unité émettrice/réceptrice (7, 9) est logée dans une réception (11) prévue dans le support de rétroviseur, qui est subdivisée par une paroi intermédiaire (10) en une chambre de réception (12) pour un émetteur (7) et en une autre chambre de réception (13) pour un récepteur (9) de l'unité émettrice/réceptrice (7, 9).

2. Support de rétroviseur selon la revendication 1, caractérisé en ce que l'unité émettrice/réceptrice (7, 9) est une unité émettrice/réceptrice à infrarouge.

3. Support de rétroviseur selon l'une ou l'autre des revendications 1 et 2, caractérisé en ce que le support de rétroviseur présente au moins une réception (11) pour au moins une unité émettrice/réceptrice d'un système de péage électronique.

4. Support de rétroviseur selon la revendication 3, caractérisé en ce que l'unité émettrice/réceptrice du système de guidage de circulation et du système de péage sont logées dans une réception commune.

5. Support de rétroviseur selon l'une quelconque des revendications 1 à 4, caractérisé en ce que la réception (11) est prévue dans un boîtier (6) du support de rétroviseur, lequel est relié au pied (2) de préférence au moyen d'une pièce intermédiaire (4).

6. Support de rétroviseur selon l'une quelconque des revendications 1 à 5, caractérisé en ce que depuis le pied (2) dépasse un support (3) sur lequel est agencé le rétroviseur interne (1).

7. Support de rétroviseur selon l'une ou l'autre des revendications 5 et 6, caractérisé en ce que le boîtier (6) est pourvu d'un recouvrement (14) agencé de préférence de façon détachable, à travers lequel passent les signaux d'émission/réception de l'unité émettrice/réceptrice (7, 9).

8. Support de rétroviseur selon l'une quelconque des revendications 1 à 7, caractérisé en ce que dans la réception (11) est logée une carte imprimée (8) sur laquelle reposent l'émetteur (7) et le récepteur (9) de l'unité émettrice/réceptrice (7, 9).

9. Support de rétroviseur selon l'une quelconque des revendications 1 à 8, caractérisé en ce que la réception (11) est réalisée avec un élargissement en direction d'émission de l'unité émettrice/réceptrice (7, 9).
